# EUROPÄISCHE PATENTANMELDUNG

(11) **EP 4 717 392 A1**
(43) Veröffentlichungstag der Anmeldung: **01.04.2026**
(21) Anmeldenummer: 24203213.4
(22) Anmeldetag: 27.09.2024
(51) Int. Cl.: B23K 20/10, B23K 31/12

(54) **VERFAHREN ZUR ZERSTÖRUNGSFREIEN PRÜFUNG EINER VERBINDUNG ZWISCHEN ZWEI BAUTEILEN, VERFAHREN ZUM ERZEUGEN EINER SCHWEISSVERBINDUNG ZWISCHEN WENIGSTENS ZWEI BAUTEILEN, SCHWEISSVORRICHTUNG, COMPUTERPROGRAMMPRODUKT, COMPUTERLESBARES SPEICHERMEDIUM, VERFAHREN ZUM TRAINIEREN EINES MASCHINELLEN LERNMODELLS ZUM VORHERSAGEN EINER SCHWEISSQUALITÄT SOWIE MASCHINENLERNMODELL ZUM VORHERSAGEN EINER SCHWEISSQUALITÄT**

(71) Anmelder: Telsonic Holding AG, 9552 Bronschhofen (CH)
(72) Erfinder: Solenthaler, Peter, 9543 St. Margarethen (CH)
(74) Vertreter: Hepp Wenger Ryffel AG

(57) **Zusammenfassung**

Ein Verfahren zur zerstörungsfreien Prüfung einer Verbindung zwischen zwei Bauteilen (40) verwendet ein KI-Model. Ausgehend von bereitgestellten Prozessdaten (P), die Prozessparameter des Schweissverfahrens repräsentieren, wird ein Beurteilungswert (B) ermittelt. Dieser Beurteilungswert (B) wird im Hinblick auf die Erfüllung von Sollkriterien (SK) geprüft. Ausserdem wir ein Erwartungswert (E) auf der Basis der Prozessdaten (P) ermittelt. Der Erwartungswert (E) charakterisiert die Zuverlässigkeit des Beurteilungswertes (B).

## Beschreibung

Die Erfindung betrifft ein Verfahren zur zerstörungsfreien Prüfung einer Verbindung zwischen zwei Bauteilen, ein Verfahren zum Erzeugen einer Schweissverbindung zwischen wenigstens zwei Bauteilen, eine Schweissvorrichtung, ein Computerprogrammprodukt, ein computerlesbares Speichermedium, ein Verfahren zum Trainieren eines maschinellen Lernmodells zum Vorhersagen einer Schweissqualität sowie ein Maschinenlernmodell zum Vorhersagen einer Schweissqualität gemäss den Merkmalen des Oberbegriffs der unabhängigen Patentansprüche.

Bei industriellen Verbindungsverfahren wie Schweissverfahren und insbesondere Ultraschallschweissverfahren ist es wichtig, die Qualität der hergestellten Verbindung zuverlässig vorhersagen oder bestimmen zu können. Die Ermittlung der Qualität der Verbindung durch mechanische Tests ist dabei aus verschiedenen Gründen nicht zufriedenstellend. Solche Tests sind mit grossem Aufwand verbunden. Ausserdem führen solche Tests zur Zerstörung der geprüften Verbindung.

Es besteht daher ein Bedürfnis nach Verfahren und Vorrichtungen, mit denen die Qualität einer Verbindung zerstörungsfrei ermittelt oder vorhergesagt werden kann.

Dazu sind bereits verschiedene Lösungen bekannt, unter anderem auch mittels KI-basierten Systemen.

Aus DE 10 2021 111 962 ist beispielsweise ein Beurteilungsverfahren zum Beurteilen eines Bearbeitungsprozesses, ein Trainierverfahren zum Trainieren eines KI-Systems und eine Ultraschallbearbeitungsanlage bekannt, wobei mit einer codierten Bilddatei die Qualität des mit einem Bearbeitungsverfahren bearbeiteten Werkstücks ermittelt werden kann.

Aus DE 10 2022 112 098 ist ein Verfahren zur Prozessparameterbestimmung für einen Ultraschallbearbeitungsprozess bekannt, bei dem eine objektive, reproduzierbare und akkurate Prozessparameterfindung möglich sein soll.

US 2017/225275 zeigt eine Vorrichtung und ein Verfahren zum Messen der Qualität einer Ultraschallschweissverbindung. Mit einer Schweissqualitätmesseinheit wird ein Sensorsignal verarbeitet. Auf der Basis der bei der Schweissung absorbierten Energie wird ermittelt, ob ein Schweissdefekt vorliegen könnte.

KR 1020130036104 zeigt ein Verfahren zum Überwachen des Schweissstatus beim Ultraschallschweissen in Echtzeit. Ein Messschritt erfolgt dabei gleichzeitig zum Schweissschritt.

Aus WO 2017/129250 ist es bekannt, die Qualität einer Ultraschallbehandlung anhand eines Beurteilungswertesatzes vorzunehmen. Dabei werden beispielsweise die Schweisszeit, eingebrachte Leistung oder eingebrachte Energie berücksichtigt.

In DE 34 29 776, US 2014/0203066 oder US 10,466,204 wird ein Verfahren zur Qualitätskontrolle beim Ultraschallschweissen gezeigt, das auf der Erfassung von Schweissparametern basiert.

EP 1 677 942 zeigt ein Verfahren zur Qualitätsüberprüfung von in einem Verdichtungsraum einer Ultraschallschweissvorrichtung verschweissten Leitern. Dabei wird nach dem Verschweissen der Leiter der Verdichtungsraum druckentlastet und Ultraschall wird auf die verschweissten Leiter gegeben und anschliessend eine charakteristische Grösse gemessen. Die Prüfung der Verschweissung erfolgt dabei direkt im Verdichtungsraum, ohne dass es zusätzlicher Einrichtungen bedürfe.

In DE 10 2021 102 100 wird ein Verfahren und eine Vorrichtung zum Prüfen von zum Schweissen vorgesehenen Gegenständen beschrieben. Dabei wird in Abhängigkeit eines Prüfparametersatzes ein zum Prüfen vorgesehener Gegenstand mit Ultraschallwellen so beaufschlagt, dass er noch nicht geschweisst wird. Während dieser Beaufschlagung wird eine Messgrösse und eine Prüfsignatur bestimmt, welche dann mit einer Referenzsignatur verglichen werden kann.

US 2019/271669 zeigt ein Verfahren und eine Vorrichtung, die es ermöglichen, die Schweissqualität einer Ultraschallschweissung auf nicht zerstörende Art und Weise zu ermitteln. Dabei werden Schwingungscharakteristiken während des Schweissvorgangs berücksichtigt.

Alle diese bekannten Lösungen weisen aber verschiedene Nachteile auf. Insbesondere ist die Vorhersage der Schweissqualität nicht in jedem Fall zuverlässig möglich.

Die Aufgabe der vorliegenden Erfindung besteht daher darin, die Nachteile des Bekannten zu vermeiden und insbesondere Verfahren und Vorrichtungen bereitzustellen, die eine zuverlässige und wiederholbare Vorhersage der Qualität einer Verbindung zwischen zwei Bauteilen erlaubt. Dabei soll es sich insbesondere um eine Schweissverbindung und besonders eine Ultraschallschweissverbindung handeln.

Erfindungsgemäss werden diese Aufgaben durch ein Verfahren zur zerstörungsfreien Prüfung einer Verbindung zwischen zwei Bauteilen, ein Verfahren zur Erzeugen einer Verbindung zwischen wenigstens zwei Bauteilen, eine Schweissvorrichtung, ein Computerprogrammprodukt, ein computerlesbares Speichermedium, ein Verfahren zum Trainieren eines maschinellen Lernmodells zum Vorhersagen einer Schweissqualität sowie durch ein Maschinenlernmodell zum Vorhersagen einer Schweissqualität mit den Merkmalen der unabhängigen Patentansprüche gelöst.

Ein erster Aspekt der Erfindung betrifft daher ein Verfahren zur zerstörungsfreien Prüfung einer Verbindung zwischen wenigstens zwei Bauteilen. Dabei handelt es sich insbesondere um ein Ultraschallschweissverbindungsverfahren. Bei den Bauteilen handelt es sich typischerweise um metallische Bauteile, beispielsweise Litzen, die an Terminals oder an andere Litzen geschweisst werden. Es sind aber auch andere Bauteile und andere Materialien denkbar.

In einem ersten Schritt werden Prozessdaten bereitgestellt, welche wenigstens einen während des Schweissverfahrens erfassten Prozessparameter repräsentieren. Der Begriff Prozessparameter umfasst im Rahmen der vorliegenden Erfindung Parameter, die im direkten Zusammenhang mit dem Betrieb der Schweissvorrichtung stehen, beispielsweise Daten im Zusammenhang mit einem Generator oder in Zusammenhang mit dem Kraftsystem (Presse, Sonotrode, Amboss), aber auch Parameter, die an oder benachbart zu den zu verschweissenden Bauteilen gemessen werden.

Auf der Basis der Prozessdaten wird ein Beurteilungswert ermittelt.

Der Beurteilungswert wird dann im Hinblick auf die Erfüllung von Sollkriterien geprüft. Typischerweise handelt es sich bei den Sollkriterien um für Qualitätsmerkmale der erzeugten Verbindung relevante Kriterien.

Die Qualität einer Schweissverbindung hängt von einer Vielzahl von verschiedenen Faktoren (z.B. Verfahrensparameter, Eigenschaften der Bauteile, Umgebungsparameter, Zustand der Komponenten der Schweissanlage) ab. Die Ermittlung von Beurteilungswerten ist daher immer mit einer gewissen Unsicherheit verbunden. Daher wird in einem weiteren Schritt ein Erwartungswert ermittelt, der ebenfalls auf den Prozessdaten basiert. Der Erwartungswert charakterisiert die Zuverlässigkeit des vorherbestimmten Beurteilungswerts. Er ermöglicht es, einzuschätzen, ob dem Resultat der Prüfung des Beurteilungswerts im Hinblick auf die Erfüllung der Sollkriterien vertraut werden kann oder nicht.

Für den Fall, dass die Sollkriterien nicht erfüllt sind, wird bevorzugt direkt ein Hinweis ausgegeben, dass die Schweissverbindung nicht als gut erachtet wird. In diesem Fall muss der Erwartungswert nicht angegeben werden. Es ist auch denkbar, in diesem Fall von der Ermittlung eines Erwartungswerts abzusehen.

Wenn die Sollkriterien erfüllt sind, wird hingegen bevorzugt der Beurteilungswert und der Erwartungswert bereitgestellt, insbesondere zur weiteren Verarbeitung der Daten.

Die vorliegende Erfindung basiert daher zunächst darauf, dass anhand von in situ während des Schweissvorgangs bereitgestellten Prozessdaten ein Beurteilungswert und ein Erwartungswert ermittelt wird. Dabei werden noch keine Eigenschaften der erstellten Verbindung berücksichtigt.

Wenn der Erwartungswert eine erste Konfidenzschwelle erreicht, wird in einem weiteren Schritt bevorzugt eine Qualitätsvorhersage ausgegeben. Die Qualitätsvorhersage charakterisiert die erwartete Qualität der Schweissverbindung. Dabei kann es sich beispielsweise um quantitative Angaben wie eine erwartete Abzugskraft oder um qualitative Angaben gemäss einer bestimmten Abstufung handeln, beispielsweise in einer binären Abstufung gut/schlecht oder gemäss einer mehrstufigen Einteilung **(z.B.** sehr gut/gut/mittel/schlecht).

Wenn der Erwartungswert die erste Konfidenzschwelle nicht erreicht ist davon auszugehen, dass der Beurteilungswert keine aufschlussreichen Hinweise auf die Schweissqualität liefert. Dies bedeutet nicht, dass die Schweissqualität zwingend schlecht ist. Daher wird in diesem Fall bevorzugt eine erweiterte Prüfung auf der Basis von Eigenschaften des verschweissten Bauteils veranlasst. Die Veranlassung dieser erweiterten Prüfung kann durch Anweisungen an den Nutzer erfolgen. Es ist aber auch denkbar, direkt automatisiert weitere Prüfschritte auszulösen. Es ist auch denkbar, in einer Eingabeschnittstelle zur Eingabe von weiteren Daten oder Informationen aufzufordern. Ergänzend wird daher bei Bedarf die Vorhersage der Qualität anhand von ex situ nach dem Schweissvorgang bereitgestellten Werten verbessert. Dabei können zusätzlich auch Eigenschaften der erstellten Verbindung berücksichtigt werden.

Die ausgegebene Qualitätsvorhersage kann dem zuvor ermittelten Beurteilungswert entsprechen. Es ist aber auch denkbar, eine Qualitätsvorhersage von dem Beurteilungswert abzuleiten, insbesondere zur Vereinfachung der Interpretation.

Zusätzlich oder alternativ zu der Ausgabe der erwarteten Qualität der Schweissverbindung oder der Veranlassung einer erweiterten Prüfung ist es auch denkbar, zukünftige Schweissprozesse oder zukünftige Prüfprozesse auf der Basis des Beurteilungswerts und des Erwartungswerts anzupassen. Insbesondere wenn ein Prozess zu nicht stabilen Resultaten führt, ermöglicht dies eine selbstlernende Verbesserung während des laufenden Betriebs.

Bevorzugt erfolgt das Veranlassen der erweiterten Prüfung durch die Ausgabe von Anweisungen an den Nutzer auf einer Ausgabevorrichtung. Dies kann beispielsweise eine Aufforderung sein, die erzeugte Verbindung einem Einzeltest zu unterziehen.

Alternativ kann auf der Ausgabevorrichtung die Anweisung ausgegeben werden, gemessene Eigenschaften der verschweissten Bauteile einzulesen. Bevorzugt handelt es sich bei den Eigenschaften des verschweissten Bauteils für die erweiterte Prüfung um Resultate von nicht zerstörenden Prüfungen, insbesondere optischen, elektrischen oder akustischen Prüfungen. Diese können auf an sich bekannte Art und Weise erfolgen, insbesondere durch Bildaufnahmen und Bildauswertungen der Schweissstelle, der Messung der elektrischen Leitfähigkeit, der Bestimmung der Antwort auf eine Anregung mit Schall etc. Die Resultate der entsprechenden Prüfung können dann über die Benutzerschnittstelle der Schweissvorrichtung zugeführt und in einem weiteren Verfahrensschritt berücksichtigt werden.

Es ist aber auch denkbar, den Benutzer in bestimmten Fällen aufzufordern, eine zerstörende Prüfung vorzunehmen und Resultate der Prüfung (beispielsweise ein Zugtest oder die Messung der Anhaftungsanzahlkonzentration) über die Eingabeschnittstelle einzulesen.

Typischerweise resultiert bei einer zerstörenden Prüfung eine Abzugskraft (das heisst, die Kraft, bei der eine Schweissverbindung reisst) oder eine Information hinsichtlich der an einem Teil anhaftenden Bestandteile des anderen Teils ("Anhaftungszahlkonzentration").

Insbesondere wenn auch bei einer letzten, nicht zerstörenden Analyse im Rahmen der erweiterten Prüfung keine verlässlichen, verwertbaren Resultate erzielt werden, kann eine zerstörende Prüfung vorgenommen werden. Die Resultate der zerstörenden Prüfung können dann verwendet werden, um die Vorhersage weiter zu verbessern, **z. B.** ein Model weiter zu trainieren.

Wenn der erweiterte Erwartungswert eine zweite Konfidenzschwelle erreicht, kann eine erweiterte Qualitätsvorhersage ausgegeben werden, welche die erwartete Qualität der Schweissverbindung charakterisiert. Diese erweiterte Qualitätsvorhersage kann identisch zu der in den vorherigen Schritt bestimmten Qualitätsvorhersage sein. In diesem Fall wurde durch den erweiterten Erwartungswert nur die Aussagekraft der erweiterten Qualitätsvorhersage erhärtet. Es ist aber auch denkbar, aufgrund der erweiterten Prüfung und des erweiterten Erwartungswerts die erweiterte Qualitätsvorhersage anzupassen.

Alternativ oder zusätzlich können die Prozessdaten, der Beurteilungswert, der Erwartungswert, der erweiterte Erwartungswert, die Eigenschaften des verschweissten Bauteils einzeln oder in Kombination miteinander zum Trainieren eines KI-Modells, zum Anpassen von Betriebsparametern oder zum Anpassen von Algorithmen zum Ermitteln von zukünftigen Beurteilungswerten oder Erwartungswerten verwendet werden.

Bei für den zukünftigen Betrieb anzupassenden Betriebsparametern kann es sich typischerweise um Parameter zum Betrieb eines Ultraschallgenerators wie Amplitude, Strom, Spannung und/oder Frequenz handeln. Es können aber auch andere Betriebsparameter wie Phase, Wirkleistung, Scheinleistung, Blindleistung angepasst werden.

Es ist aber auch denkbar, zusätzliche Parameter anzupassen, die für das Schweissverfahren eine Bedeutung haben. Denkbar sind beispielsweise die Aktivierung von Temperaturkontrollen (Kühlung, Temperierung) in an sich bekannter Art und Weise. Ebenso ist es denkbar, den Ablauf des Schweissprozesses anzupassen. So kann beispielsweise eine unzureichende Qualität darauf hindeuten, dass Werkzeuge abgenutzt sind. Je nach Situation kann es daher hilfreich sein, eine Sonotrode nach dem eigentlichen Schweissvorgang unter Entspannung der Presse der Schweissvorrichtung mit einer zusätzlichen Schwingung zu beaufschlagen. Solche zusätzlichen Schwingungen können dazu dienen, möglicherweise noch an der Sonotrode anhaftende Bauteile abzuschütteln. Das Anpassen von zusätzlichen Parametern kann insbesondere einen "Abschüttelimpuls" und dessen Verbesserung wie beschrieben in WO 2018/141660 oder eine Kühlung wie beispielweise beschrieben in WO 2018/145769 umfassen.

Ebenso ist es denkbar, Subprogramme der Schweissvorrichtung in Abhängigkeit der bereitgestellten Informationen anzupassen, insbesondere eingebundene Subprogramme, die den Ablauf des Schweissprozesses modifizieren, sowie Sub-Programme, die über Schnittstellen mit anderen Systemen oder Teil-Systemen kommunizieren können. Diese anderen Systeme oder Teilsysteme können **z.B.** Messvorrichtungen oder Fertigungssteuerungssysteme (Manufacturing Execution System / MES). Die Subprogramme können rezepturbedingt eingebunden werden, wobei die Rezeptur Angaben über Materialien oder Schweissparameter enthalten kann. Es können auch ablaufrelevante Informationen **(z.B.** mit Skripten / Algorithmen) enthalten sein. Ausserdem können in die Subprogramme weitere Modelle integriert werden, die Vorhersagen generieren können und/oder den Schweissprozess bewerten können.

Wenn der erweiterte Erwartungswert die zweite Konfidenzschwelle nicht erreicht, wird eine Information ausgegeben, dass keine Qualitätsvorhersage möglich ist.

Zusätzlich oder alternativ können zu den vorstehend beschriebenen Zwecken auch wieder Prozessdaten, Beurteilungswert, Erwartungswert, erweiterter Erwartungswert und/oder Eigenschaften des verschweissten Bauteils verwendet werden, um KI-Modelle zu trainieren oder Betriebsparameter oder Algorithmen anzupassen.

Der Beurteilungswert wird bevorzugt anhand von Betriebsparametern direkt bestimmt. Wenn sich die Betriebsparameter innerhalb von gewissen Limiten befinden, wird ein positiver oder negativer Beurteilungswert ausgegeben. Bei den Limiten kann es sich beispielsweise um innerhalb von vorgegebenen Zeiten, Verfahrwegen oder wirkenden Kräften bei der Schweissung eingetragenen Energiebeträge handeln. Es sich aber auch andere zu berücksichtigende Werte (Weg, Kraft, Leistung oder ähnliches) in Abhängigkeit von anderen vorgegebenen Werten (Kraft oder Zeit) oder Kombinationen davon denkbar.

Der Erwartungswert und/oder die erweiterte Prüfung erfolgt bevorzugt durch ein KI-Modell. Dabei kann für jeden dieser Schritte ein separates KI-Modell eingesetzt werden oder es kann ein komplexeres Modell zum Durchführen aller Beurteilungsschritte verwendet werden

Besonders bevorzugt basiert das KI-Model auf einer linearen Regression auf der Basis einer Singularwertzerlegung (SVD/singular value decomposition).

Bevorzugt basiert das KI-Model für das Ermitteln des Erwartungswertes und/oder des erweiterten Erwartungswertes auf einem gemischten Model. Das gemischte Model kann auf einem ersten und einem zweiten Model basieren. Das erste Model wird dabei mit einem ersten Subset aus Trainingsdaten und das zweite Model mit einem zweiten Subset aus Trainingsdaten trainiert. Das erste Subset basiert auf Trainingsdaten, die eine erste Kategorie von Eigenschaften aufweisen. Das zweite Subset basiert auf Trainingsdaten, die eine zweite Kategorie von Eigenschaften aufweisen. Die erste Kategorie von Eigenschaften kann dabei beispielsweise eine bestimmte Anzahl der besten Schweissergebnisse repräsentieren. Die zweite Kategorie von Eigenschaften kann eine Anzahl der schlechtesten Schweissergebnisse repräsentieren. Bei den besten bzw. schlechtesten Schweissergebnissen kann es sich insbesondere um die besten und schlechtesten Abzugswerte handeln.

Bevorzugt ist das KI-Model ein kombiniertes Model. Das kombinierte Model basiert ausgehend auf einer Mehrzahl von Prozessparametern auf einer Mehrzahl von ersten und/oder einer Mehrzahl von zweiten Modellen, die jeweils für unterschiedliche Prozessparameter definiert / trainiert werden. Bei den Prozessparametern handelt es sich insbesondere um Leistung, Kraft und Verfahrweg, die in Abhängigkeit der Zeit, der eingebrachten Energie oder anderen Parametern aufgezeichnet werden. Das kombinierte Model basiert dabei bevorzugt auf einer Mehrzahl von gemischten Modellen, die jeweils ausgehend von der Mehrzahl von ersten und zweiten Modellen generiert wurden.

Prozessparameter können insbesondere Generatordaten wie Leistung, Energie, Amplitude, Strom und/oder Frequenz des Generators zur Erzeugung von Ultraschallschwingungen sein oder auch andere Betriebsparameter wie Phase, Wirkleistung, Scheinleistung, oder Blindleistung. Es können aber auch Pressendaten sein, insbesondere Kraft, Weg und/oder Verfahrgeschwindigkeit einer Presse zum Zusammenbringen der zu verbindenden Bauteilen. Ebenfalls können Prozessdaten Informationen zu den zu verschweissenden Bauteilen umfassen, insbesondere Materialdaten oder dimensionelle Eigenschaften der zu verschweissenden Bauteile. Prozessdaten können auch Messdaten umfassen, die auf Messungen der Bauteile vor dem Verbinden oder während des Verbindens basieren. Ebenso können Prozessdaten Werkzeugdaten umfassen, insbesondere Daten zum Zustand einer Sonotrode und/oder eines Amboss für eine Ultraschallschweissung. Prozessdaten können auch von den vorstehenden Daten abgeleitete Werte sein, wie **z.B.** mathematische Ableitungen, **z.B.** nach der Zeit. Prozessdaten können auch Ausgaben aus Subprogrammen umfassen, insbesondere aus den vorstehend genannten Subprogrammen.

Gemäss einer weiteren bevorzugten Ausführungsform der Erfindung werden in dem Verfahren zusätzlich Maschinenlimiten bestimmt und ausgegeben oder angepasst. Die Maschinenlimiten definieren zulässige Betriebsparameter für die konkrete Schweisssituation ausgehend von Prozessdaten. Die Maschinenlimiten werden so bestimmt, dass die Betriebsparameter sicherstellen, dass das KI-Modell zuverlässige Angaben zu der Qualität der geschweissten Verbindung erstellen kann. Damit wird sichergestellt, dass das anspruchsgemässe Verfahren in einer möglichst stabilen Umgebung abläuft, sodass eine hohe Zuverlässigkeit der Qualitätsvorhersage sichergestellt werden kann. Die Anzahl von erforderlichen erweiterten Prüfungen oder von nicht verwertbaren Vorhersagen wird dadurch massgeblich reduziert. Dabei ist es denkbar, die Maschinenlimiten in einer Schweissvorrichtung automatisch anzupassen, sodass korrekte Betriebsparameter ohne Zutun des Bedieners eingestellt und eingehalten werden. Es ist aber auch denkbar, die Maschinenlimiten über eine Ausgabeschnittstelle auszugeben und den Benutzer darauf hinzuweisen, dass innerhalb dieser Limiten gearbeitet werden sollte.

Bevorzugt ist es ausserdem denkbar, Serviceparameter zu ermitteln und auszugeben oder anzupassen. Bei den Serviceparametern kann es sich insbesondere um Hinweise zum Zustand oder zum Austausch von Teilen wie Werkzeugen handeln. Vor allem Sonotroden und/oder Ambosse nutzen sich im Laufe der Zeit ab. Aus den zur Verfügung stehenden Prozessdaten und den ermittelten Beurteilungswerten und Erwartungswerten können Rückschlüsse auf den Zustand der Werkzeuge gemacht werden. Zu diesem Zweck ist es insbesondere auch sinnvoll, die ermittelten Beurteilungswerte und Erwartungswerte in einer Zeitreihe zu speichern. Wenn beispielsweise die Beurteilungswerte im Laufe der Zeit schlechter werden oder wenn die Vorhersage weniger zuverlässig wird und dadurch die Erwartungswerte abnehmen, kann dies als Hinweis auf eine Abnutzung von Werkzeugen interpretiert werden. Genauso kann dies ein Indiz auf eine erforderliche Wartung von Teilen der Vorrichtung sein. Entsprechend können auch Hinweise zum Zeitpunkt oder der Notwendigkeit von Wartungsarbeiten ausgegeben werden. Es ist auch denkbar, diese Informationen oder Hinweise über eine Kommunikationsschnittstelle einem Anbieter von Ersatzteilen und/oder Wartungsarbeiten zu übermitteln.

Ein weiterer Aspekt der Erfindung betrifft ein Verfahren zum Erzeugen einer Verbindung zwischen wenigstens zwei Bauteilen. Es handelt sich dabei insbesondere um eine Ultraschallschweissverbindung. Im Rahmen des Verfahrens wird eine Schweissung mit der Schweissvorrichtung durchgeführt. Dabei wird eine Qualitätsvorhersage mit einem wie vorstehend beschriebenen Verfahren zur zerstörungsfreien Prüfung ermittelt. Der ermittelte Beurteilungswert und der Erwartungswert und/oder der erweiterte Erwartungswert und die Qualitätsvorhersagen werden dabei zur weiteren Verwendung wie vorstehend beschrieben bereitgestellt und bevorzugt ausgegeben.

Gemäss noch einem weiteren Aspekt der Erfindung werden in einem Verfahren zum Erzeugen einer Verbindung zwischen wenigstens zwei Bauteilen in einem ersten Schritt Maschinenlimiten bereitgestellt. Das Verfahren ist bevorzugt ein Ultraschallschweissverfahren. Die Maschinenlimiten definieren zulässige Betriebsparameter für eine konkrete Schweisssituation. Die konkrete Schweisssituation wird insbesondere durch die Natur der zu verschweissenden Bauteile (beispielsweise Materialien und Dimensionen) definiert, kann aber auch weitere Informationen umfassen, wie Werkzeugtemperaturen oder Werkzeugzustände. Die Betriebsparameter sind so eingestellt, dass ein KI-Modell zuverlässige Angaben zu der Qualität der geschweissten Verbindung erstellen kann. Die Schweissung wird dann mit Betriebsparametern durchgeführt, die sich innerhalb der Maschinenlimiten befinden. Anschliessend kann mit dem KI-Modell eine Qualitätsvorhersage für die Schweissverbindung erfolgen, insbesondere wie vorstehend beschrieben.

Noch ein weiterer Aspekt der Erfindung betrifft ein Verfahren zur zerstörungsfreien Prüfung einer Verbindung zwischen wenigstens zwei Bauteilen. Wiederum ist das Verfahren bevorzugt ein Ultraschallschweissverfahren und die erzeugte Verbindung eine Ultraschallschweissverbindung. Zunächst werden Prozessdaten bereitgestellt, welche wenigstens einen während des Schweissverfahrens erfassten Prozessparameter repräsentieren. Die Prozessdaten werden in einer Rechneranordnung bereitgestellt. Bei den Prozessdaten handelt es sich bevorzugt um die vorstehend beschriebenen Prozessparameter.

Basierend auf den Prozessdaten wird mit der Rechneranordnung ein Beurteilungswert ermittelt und im Hinblick auf die Erfüllung von Sollkriterien geprüft. Die Ermittlung und Prüfung basiert auf den Prozessdaten mittels der Rechneranordnung.

Ausserdem wird ein Erwartungswert ermittelt, welche die Zuverlässigkeit des Beurteilungswerts charakterisiert. Der Erwartungswert wird ebenfalls basiert auf den Prozessdaten mit der Rechneranordnung ermittelt.

Ausserdem werden Eigenschaften des verschweissten Bauteils für eine erweiterte Prüfung in der Rechneranordnung bereitgestellt.

Bei den Prozessdaten handelt es sich um in situ, das heisst während oder vor dem Schweissvorgang in einer Schweissvorrichtung oder an den zu verschweissenden Bauteilen ermittelten Daten. Bei den Eigenschaften des verschweissten Bauteils für eine erweiterte Prüfung handelt es sich um ex situ Daten, das heisst um Daten, die nach dem Verschweissvorgang ermittelt werden. Dabei können diese Daten im Schweissraum oder ausserhalb des Schweissraums ermittelt werden.

Mit der Rechneranordnung wird dann eine Qualitätsvorhersage bestimmt, welche die erwartete Qualität der Schweissverbindung charakterisiert. Die Bestimmung der Qualitätsvorhersage basiert auf dem Beurteilungswert, den Eigenschaften des verschweissten Bauteils und/oder dem Erwartungswert. Das erfindungsgemässe Verfahren erlaubt eine zerstörungsfreie Prüfung mit besonders aussagekräftigen Qualitätsvorhersagen.

Noch ein weiterer Aspekt der Erfindung betrifft eine Schweissvorrichtung mit einer Rechenanordnung, die derart ausgebildet ist, dass sie eines der vorstehend beschriebenen Verfahren durchführen kann. Dabei handelt es sich bevorzugt um eine an sich bekannte Ultraschallschweissvorrichtung mit einem Ultraschallgenerator, einem Konverter, einer Sonotrode, einer Presse und einen Amboss sowie Mitteln zum Bestimmen von Prozessdaten. Die Prozessdaten können sich dabei beziehen auf Parameter der Ultraschallschwingungen oder auf Parameter, die sich aus dem Zusammenwirken von Sonotrode, Amboss und Presse ergeben.

Ein weiterer Aspekt der Erfindung betrifft ein Computerprogrammprodukt, das Befehle umfasst, die bei der Ausführung des Programms durch einen Computer diesen veranlassen, eines der vorgenannten Verfahren auszuführen.

Ein weiter Aspekt der Erfindung betrifft ausserdem ein computerlesbares Speichermedium, umfassend Befehle, die bei der Ausführung durch einen Computer den Computer veranlassen, eines der vorstehend beschriebenen Verfahren auszuführen.

Gemäss einem weiteren Aspekt der Erfindung wird ein Maschinenlernmodel zum Vorhersagen einer Schweissqualität einer Verbindung zwischen zwei Bauteilen bereitgestellt. Das Maschinenlernmodel basiert auf einem gemischten Model. Das gemischte Model basiert auf einem ersten Model und einem zweiten Model. Das erste Model wurde mit einem ersten Subset aus Trainingsdaten trainiert. Das zweite Model wurde mit einem zweiten Subset aus Trainingsdaten trainiert. Das erste Subset basiert dabei auf Trainingsdaten, die eine erste Kategorie von Eigenschaften aufweisen. Das zweite Subset basiert auf Trainingsdaten, die eine zweite Kategorie von Eigenschaften aufweisen. Bevorzugt repräsentiert die erste Kategorie von Eigenschaften die n besten Schweissergebnisse, insbesondere Abzugswerte. Die zweite Kategorie von Eigenschaften repräsentiert insbesondere die m schlechtesten Schweissergebnisse, insbesondere Abzugswerte.

Bevorzugt ist das Maschinenlernmodel insbesondere ein kombiniertes Model. Das Model ist, ausgehend von einer Mehrzahl von Prozessparametern, basierend auf einer Mehrzahl Modellen, insbesondere von ersten und/oder zweiten Modellen, aufgebaut. Bei der Mehrzahl von Prozessparametern handelt es sich insbesondere um Leistung, Kraft und Verfahrweg. Das kombinierte Model basiert dabei insbesondere auf einer Mehrzahl von gemischten Modellen, die ausgehend von der Mehrzahl von ersten und zweiten Modellen generiert wurden.

Noch ein weiterer Aspekt betrifft ein Verfahren zum Trainieren eines maschinellen Lernmodels zum Vorhersagen einer Schweissqualität.

In einem ersten Schritt werden Eigenschaften in Trainingsdaten identifiziert, welche die Qualität der Schweissergebnisse repräsentieren. Dabei handelt es sich insbesondere um gemessene **Ab**zugswerte.

Ausgehend von den identifizierten Eigenschaften werden ein erstes und ein zweites Subset von Trainingsdaten gebildet. Das erste Subset von Trainingsdaten basiert auf Trainingsdaten, die eine erste Kategorie von Eigenschaften aufweisen. Das zweite Subset basiert auf Trainingsdaten, die eine zweite Kategorie von Eigenschaften aufweisen. Die erste und die zweite Kategorie repräsentieren dabei insbesondere die n besten bzw. m schlechtesten Schweissergebnisse. Bei den Schweissergebnissen handelt es sich insbesondere um Abzugswerte.

Auf der Basis des ersten und des zweiten Subset wird danach ein erstes und ein zweites Model trainiert. Ausgehend von dem ersten und dem zweiten Model wird ein gemischtes Model gebildet.

Bevorzugt wird eine Mehrzahl von ersten und/oder eine Mehrzahl von zweiten Modellen trainiert, ausgehend von einer Mehrzahl von Prozessparametern. Dabei handelt es sich typischerweise um Prozessparameter wie Leistung, Kraft und Verfahrweg. Ausgehend von der Mehrzahl von ersten und zweiten Modellen wird eine Mehrzahl von gemischten Modellen generiert. Die Mehrzahl der gemischten Modelle kann dann in einem kombinierten Model zusammengefasst werden.

Es versteht sich, dass die Reihenfolge auch geändert werden kann. So können zuerst erste und zweite kombinierte Modelle gebildet werden, die danach zu einem gemischten Model auf der Basis der kombinierten Modelle zusammengefasst werden.

Die Erfindung wird hier um im Folgenden in Ausführungsbeispielen und anhand der Zeichnungen näher erläutert. Es zeigen:
- Figur 1:: Eine schematische Darstellung einer erfindungsgemässen Schweissanlage.
- Figur 2:: Eine schematische Darstellung des Ablaufs des erfindungsgemässen Verfahrens.
- Figur 3a:: Eine schematische Darstellung von einzelnen im Rahmen der vorliegenden Erfindung ermittelten Werte
- Figur 3b:: Eine schematische Darstellung der Definition eines Modells auf der Basis der Werte aus Figur 3a
- Figuren 4a bis 4b:: Darstellung der Definition von Modellen auf der Basis der Schweisskraft und der höchsten/niedrigsten Abzugswerte
- Figuren 5a bis 5d:: Darstellung von kombinierten Modellen basierend auf Leistung, Verfahrweg, Kraft und Kombinationen davon und
- Figur 6:: schematische Darstellung von Aktionen basierend auf ermittelten Werten.

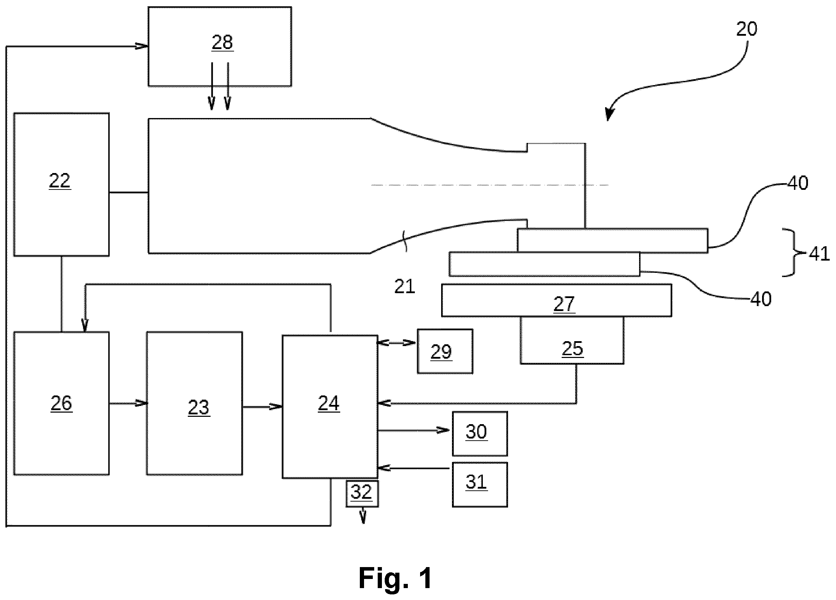

Figur 1 zeigt schematisch eine Ultraschallschweissanlage 20. Die Ultraschallschweissanlage 20 weist eine Sonotrode 21 auf. Ein Generator 26 erzeugt hochfrequente Schwingungen, die auf einen Konverter 22 gegeben werden, der die elektrischen Schwingungen in mechanische Vibrationen umsetzt. Die Vibrationen werden vom Konverter 22 in bekannter Art und Weise auf die Sonotrode 21 übergeben.

Zwei miteinander zu verbindende Bauteile oder Werkstücke 40 werden zwischen der Sonotrode 21 und einem Amboss 27 angeordnet. Im konkret gezeigten Ausführungsbeispiel ist die Sonotrode 21 als longitudinal schwingende Sonotrode dargestellt. Es sind aber auch andere Ausführungsformen und insbesondere torsionale Sonotroden denkbar.

Die beiden Bauteile 40 sind schematisch dargestellt und bilden nach der Verschweissung gemeinsam ein verschweisstes Bauteil 41. Dabei handelt es sich typischerweise um Litzen oder Terminals oder andere Arten von metallischen oder auch nicht metallischen Bauteilen. Eine Presse 28 beaufschlagt die Sonotrode 21 mit einer gegen den Amboss 27 gerichteten Kraft, sodass die Bauteile 40 zwischen Sonotrode 21 und Amboss 27 gegeneinandergepresst werden können.

Die Ultraschallschweissanlage 20 weist eine Recheneinheit 24 auf. Die Recheneinheit 24 dient zur Steuerung des Generators 26. Insbesondere dient sie zur Vorgabe von Betriebsparametern des Generators 26 wie Amplitude und Frequenz. Sie dient ausserdem zur Steuerung der Presse 28 und insbesondere zur Kontrolle Presskraft und Vorschub.

Mit einer Messeinrichtung 23 werden vom Generator 26 Betriebsparameter ermittelt und an die Recheneinheit 24 übergeben.

Mit einem Messsensor 25 im Bereich des Schweissraums für die zu verschweissenden Bauteile 40 werden ausserdem Messwerte aus dem laufenden Betrieb ermittelt und an die Recheneinheit 24 übergeben. Der Messsensor 25 kann insbesondere ein Temperatursensor sein.

Die Recheneinheit 24 ist mit einem Speichermedium 29 versehen oder wirkverbunden. Auf dem Speichermedium 29 ist insbesondere ein KI-Modell gespeichert, das ausgehend von mit der Messeinrichtung 23 und/oder dem Messsensor 25 übermittelten Daten eine Vorhersage der Qualität und damit eine zerstörungsfreie Prüfung der Verbindung zwischen den Bauteilen 40 / des verschweissten Bauteils 41 in der nachfolgend erläuterten Art und Weise ermöglicht.

Durch das KI-Modell ermittelte Informationen können zur Steuerung des Generators 26, zur Steuerung der Presse 28 und insbesondere zur Ausgabe von Informationen auf einer Ausgabevorrichtung 30 verwendet werden. Die Ausgabevorrichtung 30 kann beispielsweise ein Monitor mit einer graphischen Benutzerschnittstelle sein. Mittels einer Eingabeschnittstelle 31 kann ein Benutzer ausserdem Instruktionen oder weitere Informationen bereitstellen, die von der Rechnereinheit 24 entgegengenommen werden. Die Eingabeschnittstelle 31 und die Ausgabevorrichtung sind schematisch getrennt dargestellt. Es kann sich auch um eine kombinierte Ein-/Ausgabevorrichtung handeln, insbesondere einen Rechner mit Bildschirm., Maus und Tastatur oder um einen Touchscreen.

Über eine Ausgabeschnittstelle 32 können ausserdem weitere Informationen von der Recheneinheit zur Verfügung gestellt werden, beispielsweise zur Übermittlung an externe Rechneranordnungen.

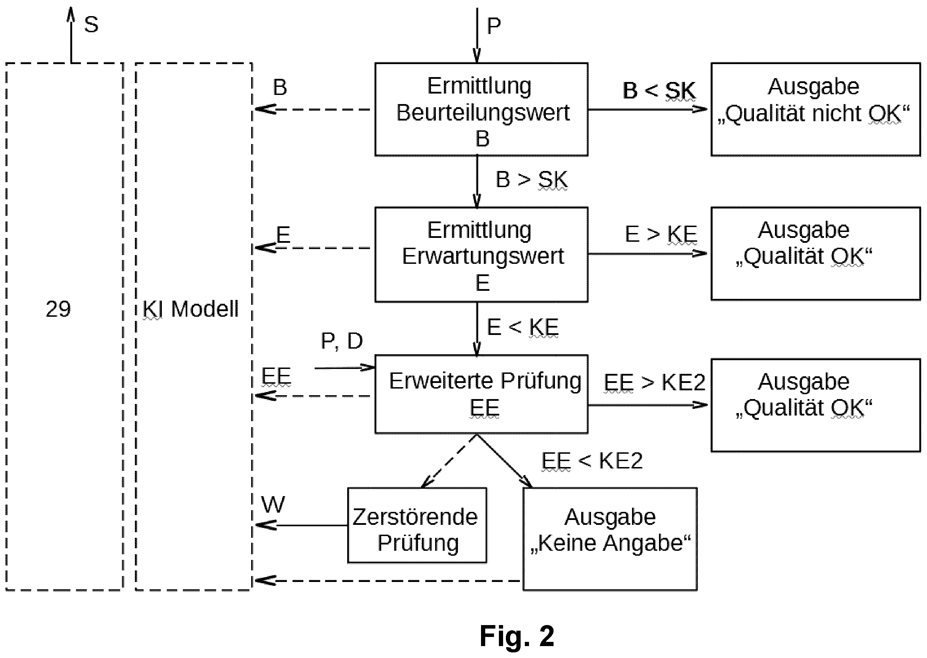

Figur 2 zeigt schematisch den Ablauf eines erfindungsgemässen Prüfverfahrens. Ausgehend von einem Schweissvorgang werden Prozessdaten P bereitgestellt. Die Prozessdaten P beinhalten insbesondere die Frequenz, Amplitude, Spannung, Phase, Wirkleistung, Scheinleistung oder Blindleistung und/oder Strom des Generators 26. Typischerweise bestehen die Prozessdaten P aus Werten wie Schweissenergie, Verfahrweg oder Kraft in Abhängigkeit von jeweils anderen Werten wie beispielsweise der Zeit. Ausserdem beinhalten sie Informationen zu Material und Dimension der verschweissten Bauteile 40. Ausserdem können Parameter der Presse 28 wie beispielsweise aufgewendete Kraft oder verfahrener Weg berücksichtigt werden.

In einem ersten Schritt erfolgt die Ermittlung eines Beurteilungswerts B auf der Basis der Prozessdaten **P.** Der Beurteilungswert B charakterisiert die erwartete Qualität der Verbindung zwischen den Bauteilen 40. Wenn der Beurteilungswert B die vorgegebenen Sollkriterien SK nicht erfüllt, erfolgt auf der Ausgabevorrichtung 30 eine Ausgabe, die anzeigt, dass die erwartete Qualität nicht ausreichend ist.

Wenn der ermittelte Beurteilungswert B die Sollkriterien SK erfüllt, wird in einem weiteren Schritt ein Erwartungswert E ermittelt. Der Erwartungswert E gibt an, wie verlässlich der ermittelte Beurteilungswert B ist. Wenn der ermittelte Erwartungswert E grösser ist, als eine vorbestimmte Konfidenzschwelle KE, wird auf der Ausgabevorrichtung 30 eine Ausgabe erzeugt, dass die erwartete Qualität der Verbindung zwischen den Bauteilen 40 ausreichend ist.

Bevorzugt ist der Beurteilungswert binär, das heisst, dass die Schweissung entweder als gut oder als nicht gut betrachtet wird. Dazu wird beurteilt, ob bestimmte der vorhergegebenen Prozessparameter innerhalb eines vorgegebenen Prozessfensters liegen. Beispielsweise wird geprüft, ob für bestimmte Beurteilungspaarungen, die innerhalb einer bestimmten Zeitspanne oder für einen bestimmten Verfahrweg eingebrachte Energie innerhalb eines Fensters für die Energie liegt.

Wenn der ermittelte Erwartungswert E die Konfidenzschwelle KE nicht erreicht, wird eine erweiterte Prüfung durchgeführt. In der erweiterten Prüfung wird ein erweiterter Erwartungswert EE ermittelt. Für diese erweiterte Prüfung werden neben den Prozessdaten P weitere Daten D zur Verfügung gestellt. Diese werden beispielsweise durch die Eingabeschnittstelle 31 einer erfindungsgemässen Vorrichtung zugeführt. Dabei handelt es sich insbesondere um physikalische Eigenschaften des verbundenen Bauteils 41 wie optische, elektrische, magnetische oder mechanische Eigenschaften.

Es ist ausserdem denkbar, Messwerte einzugeben, welche Hinweise auf physikalische Eigenschaften der erzeugten Verbindung geben können. So ist es beispielsweise denkbar, die Temperatur der geschweissten Verbindung in einem bestimmten Zeitabstand nach der Beendigung des Schweissvorgangs zu messen, beispielsweise durch kontaktlose Infrarotmessungen. Ebenso ist es denkbar, durch Verwendung von Thermoelementen die Temperatur in einer Fügezone des verschweissten Bauteils zu bestimmen, wie dies beispielsweise in DE 10 2021 117 697 beschrieben ist. Die damit ermittelten Daten können ebenfalls bei der Ermittlung des Erwartungswerts zur Verfügung gestellt und berücksichtigt werden.

Wenn der ermittelte erweiterte Erwartungswert EE eine zweite Konfidenzschwelle KE2 erfüllt, erfolgt eine Ausgabe, dass die erwartete Qualität gut ist. Wenn der erweiterte Erwartungswert unterhalb der zweiten Konfidenzschwelle KE2 liegt, erfolgt eine Ausgabe, dass keine Vorhersage zur Schweissqualität gemacht werden kann oder dass die Schweissqualität voraussichtlich nicht ausreichend ist.

Die Erfindung wurde vorstehend mit einem Fokus auf die mechanische Belastbarkeit einer Schweissverbindung erläutert. Die erzeugte Verbindung kann aber auch im Hinblick auf andere, relevante Eigenschaften zerstörungsfrei geprüft werden. Alternativ oder parallel zueinander können beispielsweise mechanische **Ab**zugswerte, elektrische Leitfähigkeiten, optische Eigenschaften (beispielsweise die Verfärbung oder die Anhaftung von Partikeln) ermittelt oder vorhergesagt werden.

Die erweiterte Prüfung kann abschliessend auch einen Schritt einer zerstörenden Prüfung umfassen. Dabei kann es sich insbesondere um einen Test zum Ermitteln einer Abzugskraft der Verbindung handeln. Die zerstörende Prüfung ist optional und daher mit einer gestrichelten Linie dargestellt.

Die Ermittlung der einzelnen Werte, insbesondere, des Erwartungswerts E und des erweiterten Erwartungswerts EE erfolgen durch ein KI-Model. Zum Verbessern des KI-Models ist es denkbar, den ermittelten Beurteilungswert B, den Erwartungswert E, den erweiterten Erwartungswert EE und/oder Werte W aus der zerstörenden Prüfung dem KI-Model zuzuführen, um ein fortgesetztes Trainieren des Modells zu ermöglichen. Diese optionalen Schritte sind durch gestrichelte Linien dargestellt.

In der erweiterten Prüfung wird der Nutzer insbesondere angewiesen, bestimmte geschweisste Bauteile einer weiteren Prüfung zu unterziehen, wenn die Vorhersage der Qualität nicht ausreichend klar ist. Dies kann durch eine Handlungsanweisung an den Nutzer erfolgen. Es ist aber auch denkbar, direkt entsprechende Prüfungen automatisiert in der erfindungsgemässen Vorrichtung zu veranlassen, beispielsweise durch eingebaute Prüfmittel wie Kameras, Messgeräte zum Messen von elektrischer Leitfähigkeit oder magnetischer Eigenschaften.

Unabhängig vom Resultat der Prüfung und von den ermittelten Werten ist es denkbar, über die weitere Schnittstelle 31 Informationen zu den ermittelten Werten auszugeben. Insbesondere wenn die Qualität schlechter wird, kann dies ein Hinweis auf abgenutzte Werkzeugteile sein. Daher werden die ermittelten Werte B, E und EE in einer Zeitreihe auf den Speicher 29 oder in einem anderen geeigneten Speichermedium abgelegt. Entsprechend können durch Anwendung des KI-Models oder mittels anderer Rechenmodellen Serviceanweisungen S ermittelt und übertragen werden.

Typische bei der Vorhersage zur verwendende Parameter können sein:
- Die Schweisszeit, insbesondere wenn hinsichtlich einer bestimmten Energie oder Kraft oder eines Wegs geschweisst wird, das heisst die Zeit, die verstreicht, bis eine Energie eingetragen / eine Kraft erreicht / ein Weg verfahren wird.
- Die initiale und/oder die finale Dimension (beispielsweise Höhe und/oder Breite) eines aus Litzen verschweissten Knotens.
- Optische Eigenschaften des verschweissten Bauteils.
- Die Querschnitte der verschweissten Bauteile und deren Veränderung / Kompaktierung.
- Abzugskräfte.
- Arbeitsvolumen des Materials im Verbindungsbereichs der Werkstücke, **z.B.** anhand einer mehrere Querschnittsflächen ("Weld nugget cross-section")
- Elektrische Eigenschaften, insbesondere elektrische Leitfähigkeit oder Widerstand oder Spannungsabfälle.
- Beschädigungen von zu der Schweissstelle benachbarten und mit den zu verbindenden Werkstücken verbundenen Koponenten oder benachbarte Komponenten der Schweissanlage (sowohl des Ultraschallstacks oder der eine Anpresskraft erzeugenden Einheit wie eine Presse).
- Bruchstellen an verschweissten Bauteilen wie Terminals.
- Visuelle Eigenschaften von Isolationsmaterial.
- Zustand von Werkzeugen.
- Weitere für die Schweissung vorgegebene oder relevante Kriterien, wie insbesondere Qualitätskriterien gemäss USCAR38-2.

Typischerweise sollte die Schweisszeit bis zum Erreichen eines erwünschten Energieeintrags im Laufe der Zeit ungefähr konstant bleiben. Unübliche Veränderungen in der Schweisszeit können Hinweise darauf geben, dass sich der Prozess verändert hat.

Die initiale und ursprüngliche Höhe des geschweissten Knotens kann unmittelbar direkt in der Schweissvorrichtung mittels Sensoren gemessen werden. Die initiale Höhe kann insbesondere auch verwendet werden, um sicherzustellen, dass sich das verwendete Material innerhalb von vorgegebenen Bandbreiten befindet.

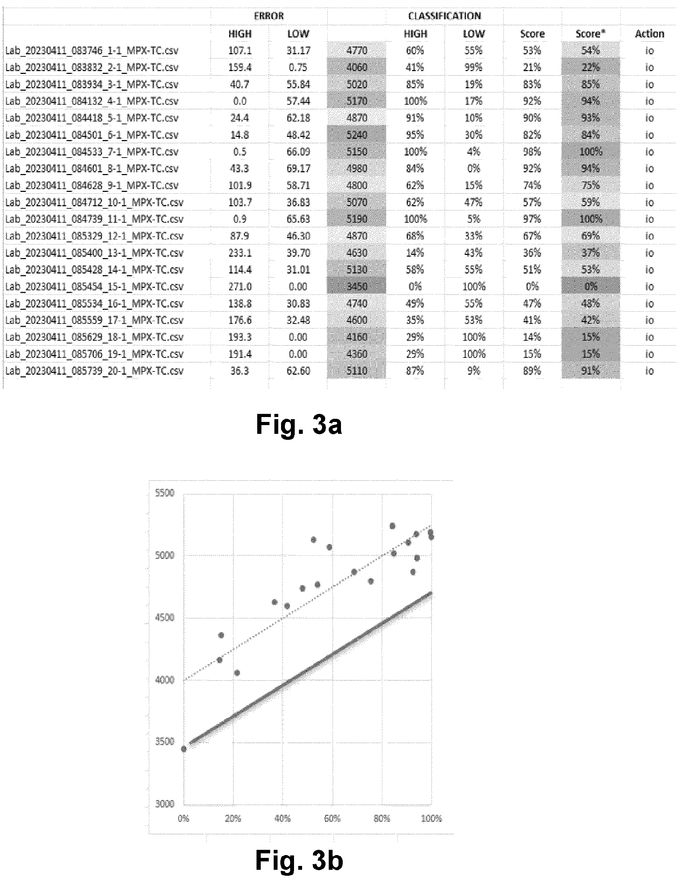

In den Figuren 3a und 3b ist schematisch dargestellt und erläutert, wie das angewendete KI-Model aufgebaut ist und trainiert wird. Zum Trainieren des Modells werden Abzugswerte von verbundenen Bauteilen 41 gemessen. Dies bedeutet, dass die Verbindung unter standardisierten Bedingungen einer Zugkraft so lange ausgesetzt wird, bis die Verbindung reisst. Der zum Reissen erforderliche Zug wird als Abzugskraft erfasst. Die relevanten Betriebsparameter wurden ebenfalls zeitabhängig erfasst.

Figur 3a zeigt schematisch eine Tabelle, welche die aus einzelnen Schweissungen für die Bildung eines Modells hergeleiteten Parameter zeigen. Es wurden insgesamt 20 Schweissungen durchgeführt. Für jede dieser Schweissungen bestehen Prozessparameter aus der Schweissvorrichtung, die in einer individuellen Datei pro Schweissung / Bauteil abgelegt werden.

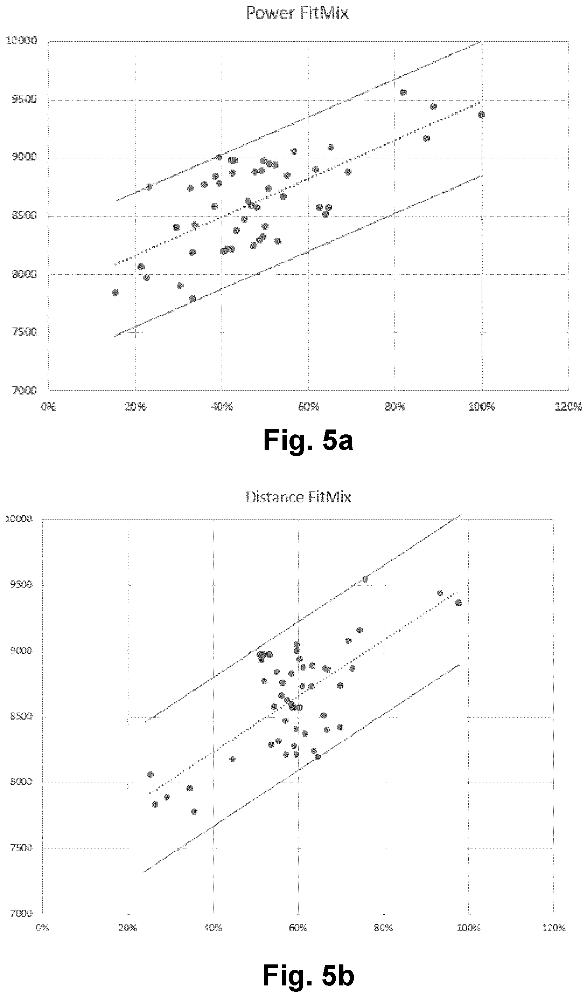

Zur Definition eines Modells werden alle 20 geschweissten Bauteile einer zerstörenden Prüfung unterzogen. In der vierten Spalte in Figur 5b sind die Kräfte verzeichnet (Abzugswerte), welche aufgewendet werden müssen, um die Verbindung zu zerstören. Anhand der vier höchsten Abzugswerte wird mittels SVD in der nachstehend erläuterten Art und Weise ein erstes, für hohe Abzugswerte optimiertes Modell definiert. Im konkreten Beispiel handelt es sich um die Schweissungen 4, 6, 7 und 11.

In einem zweiten Schritt wird für die vier schlechtesten Abzugswerte ein hinsichtlich schlechter Abzugswerte optimiertes zweites Model definiert. Dabei handelt es sich um die Schweissungen 2, 15, 18 und 19.

In der zweiten und in der dritten Spalte sind Fehler dargestellt, die sich daraus ergeben, dass bei der SVD eine reduzierte Matrix verwendet wird. Der Fehler zeigt die sich aus der reduzierten Matrix ergebenden Abweichungen.

In der zweiten Spalte ist jeweils der unter Anwendung des auf Basis der vier höchsten Abzugswerte definierten Models erzielte Fehler dargestellt. In der dritten Spalte ist der Fehler dargestellt, der sich bei Anwendung des mit den niedrigsten Abzugswerten definierten Models ergeben.

In Spalten 5 bis 8 ist eine Klassifikation dargestellt: Die Klassifikation high/low repräsentiert, mit wie grosser Wahrscheinlichkeit eine Schweissung als Schweissung mit einer hohen Zugkraft ("high") oder Schweissung mit einer niedrigen Zugkraft ("low") klassifiziert werden kann. Es versteht sich dabei von selbst, dass die vorher definierten höchsten Abzugswerte zu einer "high classification" von nahezu 100% führen, während die vier schlechtesten Abzugswerte zu einer "low classification" von nahezu 100% führen.

Die vorher definierten Modelle werden anschliessend auf die 12 weiteren Schweissungen angewendet, die zwischen den vier höchsten und den vier niedrigsten Abzugswerten liegen.

Daraus ergeben sich für jede Messung ein Fehler für die beiden Modelle (high/low). Daraus wird für jede Messung eine high/low-Klassifikation errechnet. Die Klassifikation ergibt sich durch eine Normierung der Fehler auf 100% (jeweilige low bzw. high Fehler keine Abweichung).

Aus der Klassifikation ergibt sich ein Zuverlässigkeitswert (als score bezeichnet), der in der achten Spalte für den besten Wert auf 100% normiert wurde. Dieser normierte Score-Wert zeigt die erwartete Güte der Schweissung unter Berücksichtigung der high- und low-Modelle an.

Figur 3b zeigt grafisch, wie die einzelnen Messungen entsprechend der vorhergesagten Güte ("Scores") und dem gemessenen abzugswerten grafisch dargestellt werden können. Die X-Achse zeigt den auf 100% normierten Score an, die Y-Achse die gemessenen Abzugswerte.

Basierend auf dieser Punkteschar wird eine lineare Regression angewendet (mit gestrichelter Linie in Figur 3b dargestellt) und eine durch den niedrigsten Abzugswert verlaufende Gerade mit gleicher Steigung eingetragen.

Bei neuen Messungen werden die high- und low-Modelle auf die Messwerte angewendet und es wird anhand der Modelle ein Score-Wert ermittelt. Aufgrund der Score-Werte und der dargestellten linearen Beziehung kann vorhergesagt werden, dass der Abzugswert für einen bestimmten ermittelten Score oberhalb der durchgezogen dargestellten Gerade liegen sollte.

Zum Ermitteln des Score-Werts wird das Mittel aus der hohen Klassifikation und der vom Betrag 1 abgezogenen geringen Klassifikation errechnet.

Der Fehler ergibt sich aus der Differenz der Originalkurve **(z.B.** Leistung) und der mit der reduzierten Matrix verarbeiteten Kurve.

Hohe Score-Werte zeigen im high-Model mit grosser Wahrscheinlichkeit eine gute und im low-Model mit grosser Wahrscheinlichkeit eine schlechte Schweissung **an.** Kleine Score-Werte auf der anderen Seite zeigen eine voraussichtlich unverlässliche Vorhersage an.

Der derart ermittelte Score entspricht dem Erwartungswert.

Die Zuverlässigkeit der verwendeten KI-Modelle hängt unter anderem auch von den konkreten Betriebsparametern ab. Im Rahmen dieses Ausführungsbeispiels werden Maschinenlimiten ermittelt und bereitgestellt, innerhalb welcher die erfindungsgemässe Vorrichtung 20 betrieben werden soll. Wenn der Betrieb innerhalb dieser Maschinenlimiten erfolgt, ist sichergestellt, dass das KI-Model möglichst zuverlässige Angaben zu der Qualität der geschweissten Verbindung erstellen kann.

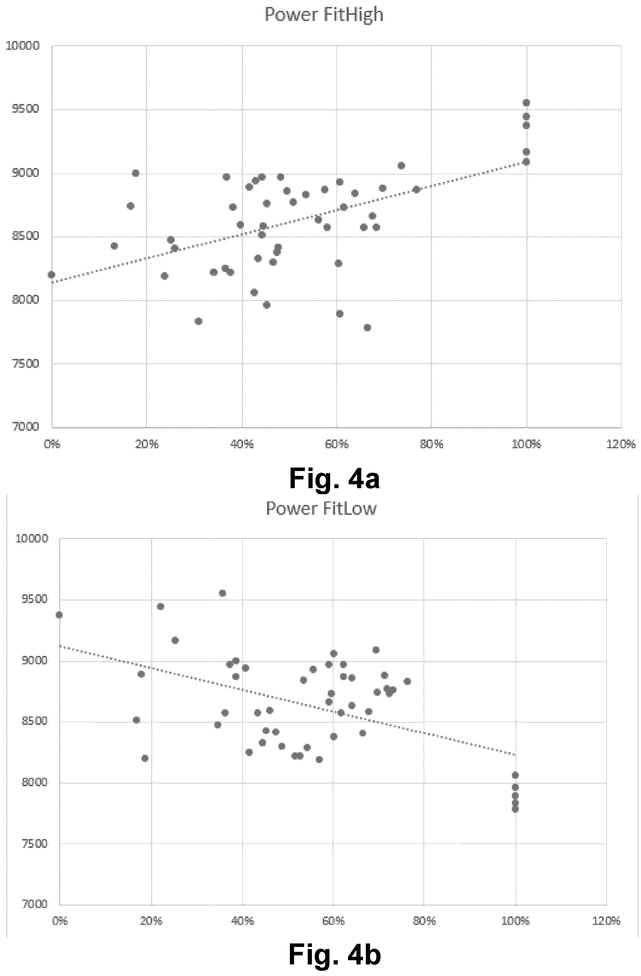

Die Figuren 4a und 4b zeigen die Definition von Modellen anhand von Messparameter auf der Basis der Leistung. Dabei wird laufend die Leistung des Generators gemessen und die Schweissung so lang fortgesetzt, bis eine vordefinierte Energie eingetragen wurde.

Figur 4a zeigt die Definition eines "high-Models", wobei vorliegend die fünf Messungen mit den höchsten Abzugswerten berücksichtigt werden und daher einem Score von 100% entsprechen.

Figur 4b zeigt die Definition eines "low-Models", wobei die fünf Werte mit den schlechtesten Abzugswerten einem Score von 100% entsprechen.

Figur 5a zeigt die Definition eines gemischten Models, basierend auf dem vorher beschriebenen high- und low-Model. Daraus ergibt sich ein optimiertes Model, welches sowohl hinsichtlich der schlechten Abzugswerte als auch der guten Abzugswerte optimiert ist. Wie vorstehend im Zusammenhang mit Figur 3b beschrieben, wird aus der Punkteschar durch lineare Regression ein Model definiert, das die Zuordnung von zukünftigen Messungen erlaubt.

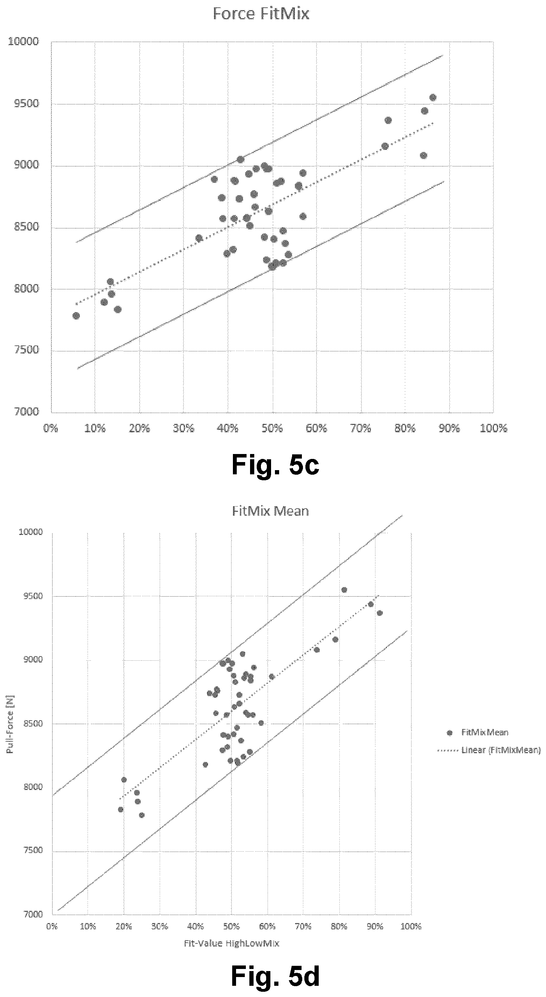

Die mit Verweis auf Figuren 4a, 4b und Figur 5a beschriebenen Verfahrensschritte werden anschliessend für Prozessdaten angewendet, die Distanz Verfahrweg der Sonotrode in Abhängigkeit der eingetragenen Energie (Figur 5b) und die Kraft in Abhängigkeit der eingetragenen Energie (Figur 5c) repräsentieren.

Aus diesen drei Modellen (Leistung / Distanz / Kraft) wird ein kombiniertes Model erzeugt, durch Erzeugung eines gewichteten Mittels der drei Bedingungen (siehe Figur 5d).

Zukünftige Messungen werden anhand dieses kombinierte Durchschnittsmodels bearbeitet. Dadurch ergeben sich besonders aussagekräftige und stabile Vorhersagen.

Es ist zusätzlich denkbar, auch ein mittleres Model zu definieren, welches auf Schweissungen mit mittleren Abzugskräften basiert. Dadurch kann das Model weiter verbesswert werden.

Anhand der ermittelten Score-Werte kann ausserdem entschieden werden, ob weitere Messungen erforderlich sind.

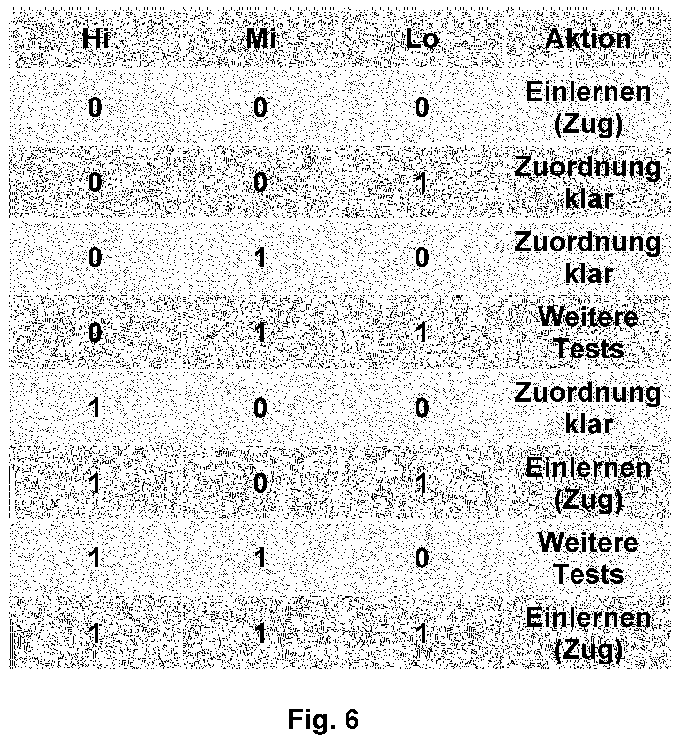

Figur 6 zeigt schematisch, wie sich aus drei Modellen (high / mid / low) und den ermittelten Scores weitere Aktionen ergeben. Messungen, bei denen der Score-Wert in einem Model hoch (1) und in den anderen Modellen niedrig (0) ist, führen zu einer klaren Zuordnung. So ist beispielsweise die Schweissung gemäss zweiter Zeile klar als schlechte Schweissung (low), die Schweissung gemäss dritter Zeile klar als mittlere Schweissung (mid) und die Schweissung gemäss sechster Zeile klar als gute Schweissung (high) erkennbar.

Falls die Scores zu konträren Resultaten führen (beispielsweise sechste und achte Zeile), wird eine zerstörende Prüfung vorgenommen und die Werte werden zum fortgesetzten Trainieren des Models verwendet ("Einlernen-Zug" gemäss Spalte Aktion). Gleiches gilt (siehe erste Zeile), wenn kein Score-Wert resultiert.

Wenn hingegen ein mittlerer Score 1 zusammen mit einem hohen (Zeile 7) oder einem geringen (siehe Zeile 4) Score resultiert, werden weitere, nicht zerstörende Tests vorgenommen. Die Resultate können dann zur Verwendung in weiteren Modellen bereitgestellt werden.

## Patentansprüche

1. Verfahren zur zerstörungsfreien Prüfung einer Verbindung zwischen wenigstens zwei Bauteilen (40), insbesondere einer Ultraschallschweissverbindung mit den folgenden Schritten
- Bereitstellen von Prozessdaten (P), welche wenigstens einen während des Schweissverfahrens erfassten Prozessparameter repräsentieren
- Auf der Basis der Prozessdaten, Ermitteln eines Beurteilungswertes (B) und Prüfung des Beurteilungswerts (B) im Hinblick auf die Erfüllung von Sollkriterien (SK)
- Ermitteln eines Erwartungswerts (E) auf der Basis der Prozessdaten (P), wobei der Erwartungswert (E) die Zuverlässigkeit des Beurteilungswertes (B) charakterisiert, insbesondere weiter enthaltend die Schritte
o Wenn die Sollkriterien (SK) nicht erfüllt sind: Ausgabe eines Hinweises, dass die Schweissverbindung nicht als «gut» erachtet wird
o Wenn die Sollkriterien (SK)erfüllt sind: Bereitstellen des Beurteilungswertes (B) und des Erwartungswertes (E).

2. Verfahren nach Anspruch **1,** enthaltend die weiteren Schritte:
- Wenn der Erwartungswert (E) eine erste Konfidenzschwelle erreicht: Ausgeben einer Qualitätsvorhersage (Q), welche die erwartete Qualität der Schweissverbindung charakterisiert
- Wenn der Erwartungswert (E) die erste Konfidenzschwelle nicht erreicht: Veranlassen einer erweiterten Prüfung auf der Basis von Eigenschaften des verschweissten Bauteils zur Erzielung eines erweiterten Erwartungswertes (EE).

3. Verfahren nach einem der Ansprüche 1 oder 2, wobei das Veranlassen der erweiterten Prüfung durch (i) Ausgabe von Anweisungen an den Nutzer erfolgt und/oder durch (ii) die Erzeugung einer Aufforderung zum Einlesen von Eigenschaften der verschweissten Bauteile (41).

4. Verfahren nach einem der Ansprüche 2 oder 3, wobei die Eigenschaften des verschweissten Bauteils (41) für die erweiterte Prüfung ausgewählt sind aus der Gruppe von
- nicht-zerstörenden Prüfungen, insbesondere optischen, magnetischen, elektrischen oder akustischen Prüfungen.
- einer zerstörenden Prüfung, insbesondere mittels Zugtest oder Messung der Anhaftungsanzahlkonzentration.

5. Verfahren nach einem der Ansprüche 1 bis 4, enthaltend die weiteren Schritte:
- wenn der erweitere Erwartungswert (EE) eine zweite Konfidenzschwelle erreicht:
o Ausgeben einer erweiterten Qualitätsvorhersage (QE), welche die erwartete Qualität der Schweissverbindung charakterisiert und/oder
o Bereitstellen von wenigstens einem der Prozessdaten, Beurteilungswertes, Erwartungswertes, erweiterten Erwartungswert, Eigenschaften des verschweissten Bauteils zum Trainieren eines KI-Modells oder zum Anpassen von Betriebsparametern oder Algorithmen zum Bestimmen des Beurteilungswertes oder Erwartungswertes.
- Wenn der erweitere Erwartungswert (EE) die zweite Konfidenzschwelle nicht erreicht:
o Ausgabe einer Information, dass keine Qualitätsvorhersage möglich ist und/oder
o Bereitstellen von wenigstens einem der Prozessdaten, Beurteilungswertes, Erwartungswertes, erweiterten Erwartungswert und/oder Eigenschaften des verschweissten Bauteils zum Trainieren eines KI-Modells oder zum Anpassen von Betriebsparametern oder Algorithmen zum Bestimmen des Beurteilungswertes oder Erwartungswertes.

6. Verfahren nach einem der Ansprüche 1 bis 5, wobei wenigstens einer der Schritte (i) Ermitteln eines Beurteilungswertes (B), (ii) Ermitteln eines Erwartungswerts (E) und (iii) erweiterte Prüfung durch ein oder mehrere KI-Modelle erfolgt.

7. Verfahren nach Anspruch 6, wobei das KI-Modell für das Ermitteln des Erwartungswerts (E) und/oder (iii) Ermitteln des erweiterten Erwartungswerts (EE) ein wobei das KI-Modell auf einem gemischten Modell basiert, welches auf einem ersten Modell und einem zweiten Modell basiert,
wobei das erste Modell mit einem ersten Subset aus Trainingsdaten und das zweite Modell mit einem zweiten Subset aus Trainingsdaten trainiert wurde,
wobei das erste Subset auf Trainingsdaten basiert, die eine erste Kategorie von Eigenschaften aufweisen, und das zweite Subset auf Trainingsdaten basiert, die eine zweite Kategorie von Eigenschaften aufweisen, wobei insbesondere die erste Kategorie von Eigenschaften die n besten Schweissergebnisse, insbesondere Abzugswerte, repräsentiert und die zweite Kategorie von Eigenschaften die m schlechtesten Schweissergebnisse, insbesondere Abzugswerte repräsentiert.

8. Verfahren nach Anspruch 7, wobei das KI-Modell ein kombiniertes Modell ist, das,
ausgehend von einer Mehrzahl von Prozessparamatern, insbesondere ausgehend von Leistung, Kraft und Verfahrweg,
auf einer Mehrzahl von ersten und/oder einer Mehrzahl von zweiten Modellen basiert,
wobei insbesondere das kombinierte Modell auf einer Mehrzahl von gemischten Modellen basiert, die ausgehend von der Mehrzahl von ersten und zweiten Modellen generiert wurden.

9. Verfahren nach einem der Ansprüche 1 bis **8,** wobei die Prozessdaten ausgewählt sind aus
- Generatordaten, insbesondere Energie, Leistung, Phase, Amplitude, Strom und/oder, Frequenz des Generators (26) zur Erzeugung von Ultraschallschwingungen
- Pressendaten, insbesondere Kraft, Weg und/oder Verfahrgeschwindigkeit einer Presse (28) zum Zusammenbringen der zu verbindenden Bauteile
- Materialdaten der zu verschweissenden Bauteile (40)
- Messdaten basierend auf Messungen wenigstens einer der Bauteile (40) vor dem Verbinden oder der Bauteile (40) während des Verbindens
- Werkzeugdaten, insbesondere Daten zum Zustand einer Sonotrode (21) und/oder eines Ambosses (27) für eine Ultraschallschweissung
- Ausgaben aus Subprogrammen, insbesondere rezepturbedingt eingebundene Subprogramme, die den Ablauf des Schweissprozesses modifizieren, sowie Sub-Programme, die über Schnittstellen mit anderen Systemen oder Teil-Systemen kommunizieren können.

10. Verfahren nach einem der Ansprüche 6 bis **9,** wobei Maschinenlimiten ermittelt und ausgegeben oder angepasst werden, wobei die Maschinenlimiten zulässige Betriebsparameter für die konkrete Schweisssituation definieren, mit welchen Betriebsparametern das KI-Modell zuverlässige Angaben zu der Qualität der geschweissten Verbindung erstellen kann.

11. Verfahren nach einem der Ansprüche 1 bis 10, wobei Serviceparameter ermittelt und ausgegeben oder angepasst werden, wobei die Serviceparameter insbesondere ausgewählt sind aus Hinweise zum Zustand oder Austausch von Teilen, insbesondere Werkzeugen, Hinweise zum Zeitpunkt oder der Notwendigkeit von Wartungsarbeiten.

12. Verfahren zum Erzeugen einer Verbindung zwischen wenigstens zwei Bauteilen (40) mit einer Schweissvorrichtung, insbesondere einer Ultraschallschweissverbindung mittels einer Ultraschallschweissvorrichtung (20), mit den folgenden Schritten:
- Durchführen einer Schweissung mit der Schweissvorrichtung (20)
- Ermitteln und Bereitstellen eines Beurteilungswertes (B) und eines Erwartungswertes (E) mit einem Verfahren zur zerstörungsfreien Prüfung einer Verbindung einem der Ansprüche 1 bis 11.

13. Verfahren zum Erzeugen einer Verbindung zwischen wenigstens zwei Bauteilen (40) mit einer Schweissvorrichtung, insbesondere einer Ultraschallschweissverbindung mittels einer Ultraschallschweissvorrichtung (20), mit den folgenden Schritten:
- Bereitstellen von Maschinenlimiten, wobei die Maschinenlimiten zulässige Betriebsparameter für die konkrete Schweisssituation definieren, mit welchen Betriebsparametern ein KI-Modell zuverlässige Angaben zu der Qualität der geschweissten Verbindung erstellen kann
- Durchführen einer Schweissung mit Betriebsparametern, die sich innerhalb der Maschinenlimiten befinden
- Ermitteln einer Qualitätsvorhersage für die Schweissverbindung mit dem KI-Modell, insbesondere gemäss einem der Ansprüche 6 bis 10.

14. Verfahren zur automatischen zerstörungsfreien Prüfung einer Verbindung zwischen wenigstens zwei Bauteilen (40), insbesondere einer Ultraschallschweissverbindung, mit den folgenden Schritten
- Bereitstellen von Prozessdaten, welche wenigstens einen während des Schweissverfahrens erfassten Prozessparameter repräsentieren, in einer Rechneranordnung (24)
- Ermitteln eines Beurteilungswertes (B) und Prüfung des Beurteilungswerts im Hinblick auf die Erfüllung von Sollkriterien, basierend auf den Prozessdaten, mit der Rechneranordnung (24)
- Ermitteln eines Erwartungswertes (E) , welcher die Zuverlässigkeit des Beurteilungswertes (B) charakterisiert, basierend auf den Prozessdaten, mit der Rechneranordnung (24)
- Bereitstellen von Eigenschaften des verschweissten Bauteils (41) für eine erweiterte Prüfung in der Rechneranordnung (24)
- Bestimmen einer Qualitätsvorhersage (Q; QE) mit der Rechneranordnung (24), welche die erwartete Qualität der Schweissverbindung charakterisiert, wobei die Bestimmung basierend auf wenigstens einem Wert ausgewählt aus den
o Beurteilungswert (B)
o Eigenschaften des verschweissten Bauteils (41)
o Erwartungswert (E;EE)
erfolgt.

15. Schweissvorrichtung (20) mit einer Rechneranordnung (24), wobei die Rechneranordnung (24) derart ausgebildet ist, dass sie das Verfahren gemäss einem der Ansprüche 1 bis 14 durchführt.

16. Schweissvorrichtung (20) nach Anspruch 15, enthaltend einen Ultraschallgenerator (26), einen Konverter (22), eine Sonotrode (21), einen Amboss, sowie Mittel (23, 25) zum Bestimmen von Prozessdaten.

17. Computerprogrammprodukt, umfassend Befehle, die bei der Ausführung des Programms durch einen Computer diesen veranlassen, ein Verfahren nach einem der Ansprüche 1 bis 14 auszuführen.

18. Computerlesbares Speichermedium, umfassend Befehle, die bei der Ausführung durch einen Computer diesen veranlassen, ein Verfahren nach einem der Ansprüche 1 bis 14 auszuführen.

19. Maschinenlernmodell zum Vorhersagen einer Schweissqualität einer Verbindung zwischen zwei Bauteilen, wobei das Maschinenlernmodell auf einem gemischten Modell basiert, welches auf einem ersten Modell und einem zweiten Modell basiert,
wobei das erste Modell mit einem ersten Subset aus Trainingsdaten und das zweite Modell mit einem zweiten Subset aus Trainingsdaten trainiert wurde,
wobei das erste Subset auf Trainingsdaten basiert, die eine erste Kategorie von Eigenschaften aufweisen, und das zweite Subset auf Trainingsdaten basiert, die eine zweite Kategorie von Eigenschaften aufweisen, wobei insbesondere die erste Kategorie von Eigenschaften die n besten Schweissergebnisse, insbesondere Abzugswerte, repräsentiert und die zweite Kategorie von Eigenschaften die m schlechtesten Schweissergebnisse, insbesondere Abzugswerte repräsentiert.

20. Maschinenlernmodell nach Anspruch 19, wobei das Maschinenlernmodell ein kombiniertes Modell ist, das,
ausgehend von einer Mehrzahl von Prozessparamatern, insbesondere ausgehend von Leistung, Kraft und Verfahrweg,
auf einer Mehrzahl von ersten und/oder einer Mehrzahl von zweiten Modellen basiert,
wobei insbesondere das kombinierte Modell auf einer Mehrzahl von gemischten Modellen basiert, die ausgehend von der Mehrzahl von ersten und zweiten Modellen generiert wurden.

21. Verfahren zum Trainieren eines maschinellen Lernmodells zum Vorhersagen einer Schweissqualität, enthalten die Schritte
- Identifizieren von Eigenschaften in Trainingsdaten, welche Eigenschaften die Qualität der Schweissergebnisse repräsentieren, insbesondere von Abzugswerten
- Bilden wenigstens eines ersten und eines zweiten Subsets von Trainingsdaten, wobei das erste Subset auf Trainingsdaten basiert, die eine erste Kategorie von Eigenschaften aufweisen, und das zweite Subset auf Trainingsdaten basiert, die eine zweite Kategorie von Eigenschaften aufweisen, wobei insbesondere die erste Eigenschaft die n besten Schweissergebnisse, insbesondere Abzugswerte, repräsentiert und die zweite Eigenschaft die m schlechtesten Schweissergebnisse, insbesondere Abzugswerte repräsentiert
- Trainieren eines ersten und eines zweiten Modells auf der Basis des ersten und des zweiten Subsets
- Bilden eines gemischten Models auf der Basis des ersten und des zweiten Modells.

22. Verfahren nach Anspruch 21, wobei eine Mehrzahl von ersten und/oder eine Mehrzahl von zweiten Modellen trainiert werden, ausgehend von einer Mehrzahl von Prozessparamatern, insbesondere ausgehend von Leistung, Kraft und Verfahrweg und wobei ausgehend von der Mehrzahl von ersten und zweiten Modellen eine Mehrzahl von gemischten Modelle generiert wird und wobei die Mehrzahl der gemischten Modellen in einem kombinierten Modell zusammengefasst werden.
